(19) Europäisches Patentamt
European Patent Office
Office européen des brevets

(11) **EP 2 401 531 B1**

(12) **EUROPÄISCHE PATENTSCHRIFT**

(45) Veröffentlichungstag und Bekanntmachung des Hinweises auf die Patenterteilung:
**16.08.2017   Patentblatt 2017/33**

(21) Anmeldenummer: **09740270.5**

(22) Anmeldetag: **13.10.2009**

(51) Int Cl.:
*C22C 38/22* <sup>(2006.01)</sup>    *C22C 38/32* <sup>(2006.01)</sup>
*C22C 38/34* <sup>(2006.01)</sup>    *F16J 9/26* <sup>(2006.01)</sup>

(86) Internationale Anmeldenummer:
**PCT/EP2009/007356**

(87) Internationale Veröffentlichungsnummer:
**WO 2010/097106 (02.09.2010 Gazette 2010/35)**

(54) **KOLBENRINGE**

PISTON RINGS

SEGMENTS DE PISTON

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.02.2009   DE 102009010728**

(43) Veröffentlichungstag der Anmeldung:
**04.01.2012   Patentblatt 2012/01**

(73) Patentinhaber: **Federal-Mogul Burscheid GmbH 51399 Burscheid (DE)**

(72) Erfinder: **PELSOECZY, Laszlo 51399 Burscheid (DE)**

(74) Vertreter: **Becker Kurig Straus Patentanwälte Bavariastrasse 7 80336 München (DE)**

(56) Entgegenhaltungen:
**EP-A- 2 050 533            WO-A-2008/019716
DE-A1-102006 038 670      GB-A- 832 666
US-A- 3 880 081            US-A- 4 435 226
US-A- 4 504 312            US-B1- 6 171 222**

**Beschreibung**

Die vorliegende Erfindung betrifft Kolbenringe. Außerdem betrifft die vorliegende Erfindung ein Verfahren zur Herstellung einer Stahlwerkstoffzusammensetzung, welche den Grundkörper der erfindungsgemäßen Kolbenringe bildet.

**Stand der Technik**

Kolbenringe dichten in einem Verbrennungskraftmotor den zwischen Kolbenkopf und Zylinderwand vorhandenen Spalt gegenüber dem Brennraum ab. Bei der Auf- und Abbewegung des Kolbens gleitet der Kolbenring einerseits mit seiner äußeren Umfangsfläche in ständiger federnder Anlage gegen die Zylinderwand, andererseits gleitet der Kolbenring, bedingt durch die Kippbewegungen des Kolbens, oszillierend in seiner Kolbenringnut, wobei seine Flanken wechselnd an der oberen oder unteren Nutenflanke der Kolbenringnut anliegen. Bei den jeweils gegeneinander laufenden Gleitpartnern tritt in Abhängigkeit des Materials ein mehr oder weniger starker Verschleiß auf, der bei einem Trockenlauf zu so genannten Fressern, Riefenbildung und schließlich zu einer Zerstörung des Motors führen kann. Um das Gleit- und Verschleißverhalten von Kolbenringen gegenüber der Zylinderwand zu verbessern, wurden diese an deren Umfangsfläche mit Beschichtungen aus unterschiedlichen Materialien versehen.

Zur Herstellung hoch beanspruchter Teile von Verbrennungskraftmotoren, wie beispielsweise Kolbenringen und Zylinderlaufbuchsen, werden meist Gusseisenwerkstoffe bzw. Gusseisenlegierungen verwendet. Kolbenringe, insbesondere Kompressionsringe, unterliegen in hochbeanspruchten Motoren einer zunehmenden Belastung, unter anderem Kompressionsspitzendruck, Verbrennungstemperatur, EGR und Schmierfilmreduzierung, die deren Funktionseigenschaften, wie Verschleiß, Brandspurbeständigkeit, Microwelding und Korrosionsbeständigkeit, maßgeblich beeinflussen.

Gusseisenwerkstoffe gemäß dem Stand der Technik weisen jedoch ein hohes Bruchrisiko auf, so dass es bei der Verwendung bisheriger Werkstoffe häufig zu Ringbrüchen kommt. Gestiegene mechanisch-dynamische Belastungen führen zu kürzeren Lebensdauern von Kolbenringen oder Zylinderlaufbuchsen. Ebenso kommt es zu starkem Verschleiß und Korrosion an Lauffläche und Flanke.

Höhere Zünddrücke, reduzierte Emissionen sowie die Kraftstoff-Direkteinspritzung bedeuten steigende Belastungen für Kolbenringe. Die Folge sind Beschädigungen und Aufplattierungen von Kolbenmaterial vor allem auf der unteren Kolbenringflanke.

Aufgrund der höheren mechanischen und dynamischen Beanspruchungen von Kolbenringen und Zylinderlaufbuchsen fordern immer mehr Motorenhersteller Kolbenringe und Zylinderlaufbuchsen aus hochwertigem Stahl (vergütet und hochlegiert, wie beispielsweise Werkstoff 1.4112), Hierbei bezeichnet man Eisenwerkstoffe mit weniger als 2,08 Gew.-% Kohlenstoff als Stahl. Liegt der Kohlenstoffgehalt höher, so redet man von Gusseisen. Stahlwerkstoffe besitzen gegenüber Gusseisen bessere Festigkeits- und Zähigkeitseigenschaften, da keine Störung durch freien Graphit im Grundgefüge vorhanden ist.

Meist werden hochchromlegierte martensitische Stähle für die Herstellung von Stahlkolbenringen oder -zylinderlaufbuchsen eingesetzt. Stahlkolbenringe werden aus Profildraht hergestellt. Der Profildraht wird rund gewickelt, aufgeschnitten und über einen "Unrund"-Dorn gezogen. Auf diesem Dom erhält der Kolbenring durch einen Glühprozess seine erwünschte unrunde Form, wodurch die geforderten Tangentialkräfte eingestellt werden. Ein weiterer Nachteil der Herstellung von Kolbenringen aus Stahl ist, dass ab einem gewissen Durchmesser die Ringherstellung (Wickeln) aus Stahldraht nicht mehr möglich. Kolbenringe aus Gusseisen werden dagegen bereits unrund gegossen, so dass sie von Anfang an eine ideale Form aufweisen.

Gusseisen besitzt eine wesentlich niedrigere Schmelztemperatur als Stahl. Der Unterschied kann je nach chemischer Zusammensetzung bis zu 350°C betragen. Gusseisen ist daher einfacher zu schmelzen und zu gießen, da eine niedrigere Schmelztemperatur eine niedrigere Gießtemperatur und damit eine kleinere abkühlungsbedingte Schwindung bedeutet, wodurch der gegossene Werkstoff weniger Lunker bzw. Warm- und Kaltrisse aufweist. Eine niedrigere Gießtemperatur führt weiterhin zu einer geringeren Belastung des Formstoff (Erosion, Gasporositäten, Sandeinschlüsse) und des Ofens sowie zu geringeren Schmelzkosten.

Die Schmelztemperatur des Eisenwerkstoffs hängt nicht nur von seinem Kohlenstoffgehalt, sondern auch von dem "Sättigungsgrad" ab. Es gilt die vereinfachte Formel:

$$S_c = C/(4{,}26 - 1/3(Si+P)).$$

Je näher der Sättigungsgrad an 1 liegt, desto niedriger ist die Schmelztemperatur. Bei Gusseisen wird zumeist ein Sättigungsgrad von 1,0 angestrebt, wobei das Gusseisen eine Schmelztemperatur von 1150°C aufweist. Der Sättigungsgrad von Stahl beträgt, abhängig von der chemischen Zusammensetzung, ungefähr 0,18. Eutektischer Stahl weist eine Schmelztemperatur von 1500°C auf.

Der Sättigungsgrad kann durch den Si- oder P-Gehalt deutlich beeinflusst werden. Zum Beispiel wird sich ein um 3 Gew.-% höherer Gehalt an Silizium ähnlich wie ein 1 Gew.-% höherer C-Gehalt aus. Es ist somit möglich, einen Stahlwerkstoff mit einem C-Gehalt von 1 Gew.-% und 9,78 Gew.-% Silizium herzustellen, der die gleiche Schmelztemperatur wie Gusseisen mit einem Sättigungsgrad von 1,0 (C: 3,26 Gew.-%, Si: 3,0 Gew.-%) aufweist.

Durch eine drastische Erhöhung des Si-Gehalts kann der Sättigungsgrad des Stahlwerkstoffs erhöht werden und die Schmelztemperatur auf das Niveau von Gusseisen abgesenkt werden. Somit ist es möglich, Stahl mit Hilfe derjenigen Technik herzustellen, die auch für die Herstellung von Gusseisen, beispielsweise GOE 44, verwendet wird.

Kolbenringe und Zylinderlaufbuchsen aus hochsiliziumhaltigem Stahlgusswerkstoff sind im Stand der Technik bekannt. Allerdings beeinflusst das in höheren Mengen vorhandene Silizium die Härtbarkeit des Werkstoffs negativ, da dessen Austenitumwandlungstemperatur "Ac3" erhöht wird.

DE 102006038670 A1 offenbart einen hochsiliziumhaltigen Stahlwerkstoff für Kolbenringe und Zylinderlaufbuchsen, der neben Eisen und Verunreinigungen 0,5 bis 1,2 Gew.-% Kohlenstoff, 3,0 bis 15,0 Gew.-% Silizium und 0,5 bis 4,5 Gew.-% Nickel umfasst.

**Beschreibung der Erfindung**

Folglich ist es Aufgabe der vorliegenden Erfindung, Kolbenringe bereitzustellen, die als Grundkörper eine hochsiliziumhaltige Stahlwerkstoffzusammensetzung aufweisen, welche eine verbesserte Verschleißbeständigkeit aufweist. Die Stahlwerkstoffzusammensetzung soll durch die Herstellung im Schwerkraftguss die Eigenschaften von vergütetem Gusseisen mit Kugelgraphit in mindestens einem der folgenden Punkte übertreffen:

- Mechanische Eigenschaften wie E-Modul, Biegefestigkeit
- Widerstandsfähigkeit gegenüber Brüchen
- Gestaltfestigkeit
- Flankenverschleiß
- Laufflächenverschleiß

Diese Aufgabe wird erfindungsgemäß durch Kolbenringe gemäß Anspruch 1gelöst.

Die Stahlwerkstoffzusammensetzung wird hierzu mittels eines Verfahrens hergestellt, welches die folgenden Schritte umfasst:

a. Herstellen einer Schmelze der Ausgangsmaterialien, und

b. Abgießen der Schmelze in eine vorgefertigte Form.

Die erhöhte Verschleißbeständigkeit wird erfindungsgemäß durch den Carbidbildner Bor erreicht. Im Vergleich zu anderen Carbidbildnern, wie beispielsweise Niob, Titan, Vanadium und Wolfram sind die Carbide des Bors wesentlich weicher (nicht die kubischen $B_4C$ Borcarbide, da diese sehr hart sind). Borcarbide verursachen daher einen geringeren abrasiven Werkzeugverschleiß bei der Bearbeitung eines Stahlwerkstoffs, als die Carbide der Elemente Niob, Titan, Vanadium und Wolfram. Erfindungsgemäß wurde gefunden, dass ein Anteil von 0,1 Gew.-% Bor zu einer guten Verschleißfestigkeit führt, ohne dass sich die Bearbeitbarkeit des erhaltenen Werkstoffs so verschlechtern würde, dass sich dadurch die Herstellungskosten unverhältnismäßig erhöhen würden.

In Tabelle 1 findet sich eine Aufstellung der Härte von Carbiden der Elemente Niob, Titan, Vanadium und Wolfram:

**Tabelle 1**

| Carbid | BC | NbC | TiC | VC | WC | $W_2C$ |
|---|---|---|---|---|---|---|
| Härte HV (50 kg) | Es gibt verschiedene Borcarbide, allerdings sind aus der Literatur keine Werte bekannt | 2000 | 3000 | 2900 | 2200 | 3000 |

Die erfindungsgemäße Stahlwerkstoffzusammensetzung reduziert die Neigung der daraus hergestellten Kolbenringe, unter starker Hitze ihre Form zu verändern und sorgt somit für ein dauerhaft hohes Leistungsvermögen und vermindert darüber hinaus den Ölverbrauch.

Die erfindungsgemäße Stahlwerkstoffzusammensetzung weist weiterhin den Vorteil auf, dass die Herstellung von Stahlkolbenringen mit den zur Herstellung von Gusseisen-Werkstücken notwendigen Maschinen und Technologien ermöglicht wird. Zudem entsprechen die Herstellungskosten denen von Gusseisen-Kolbenringen, was dem Hersteller einen Kostenvorteil und eine bessere Wertschöpfung bietet. Ebenso können Werkstoffparameter frei vom Zulieferer eingestellt werden.

Erfindungsgemäß wird weiterhin ein Verfahren zur Herstellung eines erfindungsgemäßen Kolbenrings bereitgestellt, wobei die Herstellung der als Grundkörper fungierenden Stahlwerkstoffzusammensetzung die folgenden Schritte umfasst:

a. Herstellen einer Schmelze der Ausgangsmaterialien, und
b. Abgießen der Schmelze in eine vorgefertigte Form.

Als Ausgangsmaterialien können beispielsweise Stahlschrott, Kreislaufmaterial und Legierungsstoffe verwendet werden. Der Schmelzprozess erfolgt in einem Ofen, vorzugsweise einem Kupolofen. Anschließend wird ein Rohling unter Erstarrung der Schmelze hergestellt. Der Rohling kann dabei mit im Stand der Technik bekannte Methoden gegossen werden, wie beispielsweise Schleuderguss, Strangguss, Stempel-Pressverfahren, Croning oder bevorzugt Grünsandformen.

Nach Erkalten der Stahlwerkstoffzusammensetzung wird die Form ausgelehrt und der erhaltene Rohling geputzt.

Gegebenenfalls kann der Rohling anschließend vergütet werden. Diese erfolgt durch die folgenden Schritte:

c. Austenitisieren der Stahlwerkstoffzusammensetzung oberhalb ihrer Ac3-Temperartur,
d. Abschrecken der Stahlwerkstoffzusammensetzung in einem geeigneten Abschreckmedium, und
e. Anlassen der Stahlwerkstoffzusammensetzung bei einer Temperatur im Bereich von 400 bis 700°C in einem Schutzgasofen.

Als Abschreckmedium wird bevorzugt Öl verwendet.

Zur weiteren Härtung des erfindungsgemäßen Stahlwerkstoffs kann im Anschluss an die zuvor erwähnten Verfahrensschritte ein Nitrieren der erhaltenen Stahlwerkstoffzusammensetzung erfolgen. Dies kann beispielsweise durch Gasnitrieren, Plasmanitrieren oder Drucknitrieren erfolgen.

Das folgende Beispiel erläutert die Erfindung, ohne sie zu beschränken.

**Beispiel**

Es wurde ein erfindungsgemäßer Kolbenring aus einer Stahlwerkstoffzusammensetzung der folgenden Zusammensetzung hergestellt:

| Al: | 0,002 | Gew.-% |
|---|---|---|
| B: | 0,1 | Gew.-% |
| C: | 0,7 | Gew.-% |
| Cr: | 2,0 | Gew.-% |
| Cu: | 0,05 | Gew.-% |
| Mn: | 0,45 | Gew.-% |
| Mo: | 0,5 | Gew.-% |
| Nb: | 0,002 | Gew.-% |
| P: | 0,03 | Gew.-% |
| S: | 0,009 | Gew.-% |
| Si: | 3,0 | Gew.-% |
| Sn: | 0,001 | Gew.-% |
| Ti: | 0,030 | Gew.-% |
| V: | 0,027 | Gew.-% |
| W: | 0,015 | Gew.-% |
| Fe: | Rest | |

Dies erfolgte durch Herstellen einer Schmelze der Ausgangsmaterialien (Stahlschrott, Kreislaufmaterial und Legierungsstoffe), und Abgießen der Schmelze in eine vorgefertigten Grünsandform. Anschließend wurde die Form ausgelehrt und der erhaltene Kolbenring geputzt. Der Kolbenring wurde daraufhin vergütet. Diese erfolgt durch Austenitisieren oberhalb der Ac3-Temperartur der Stahlwerkstoffzusammensetzung, Abschrecken in Öl, und Anlassen bei einer Temperatur im Bereich von 400 bis 700°C in einem Schutzgasofen.

**Patentansprüche**

1. Kolbenring, als Grundkörper aufweisend eine Stahlwerkstoffzusammensetzung, **dadurch gekennzeichnet, dass** die Stahlwerkstoffzusammensetzung die folgenden Elemente im angegebenen Anteil, bezogen auf 100 Gew.-% der Stahlwerkstoffzusammensetzung, enthält:

| | | |
|---|---|---|
| B: | 0,1 | Gew.-% |
| C: | 0,7 | Gew.-% |
| Mn: | 0,45 | Gew.-% |
| Si: | 3,0 | Gew.-% |
| Al: | 0,002 | Gew.-% |
| Cr: | 2,0 | Gew.-% |
| Cu: | 0,05 | Gew.-% |
| Mo: | 0,5 | Gew.-% |
| Nb: | 0,002 | Gew.-% |
| P: | 0,03 | Gew.-% |
| S: | 0,009 | Gew.-% |
| Sn: | 0,001 | Gew.-% |
| Ti: | 0,030 | Gew.-% |
| V: | 0,027 | Gew.-% |
| W: | 0,015 | Gew.-% |

Rest: Fe und übliche Verunreinigungen,
wobei die Summe dieser Elemente 100 Gew.-% ergibt,
wobei die Stahlwerkstoffzusammensetzung mittels eines Verfahrens hergestellt wurde, welches die folgenden Schritte umfasst:

    a. Herstellen einer Schmelze der Ausgangsmaterialien, und
    b. Abgießen der Schmelze in eine vorgefertigte Form.

2. Verfahren zur Herstellung eines Kolbenrings gemäß Anspruch 1, **dadurch gekennzeichnet, dass** die Herstellung der Stahlwerkstoffzusammensetzung die folgenden Schritte umfasst:

    a. Herstellen einer Schmelze der Ausgangsmaterialien, und
    b. Abgießen der Schmelze in eine vorgefertigte Form,

sowie gegebenenfalls die folgenden Schritte:

    c. Austenitisieren der Stahlwerkstoffzusammensetzung oberhalb ihrer Ac3-Temperartur,
    d. Abschrecken der Stahlwerkstoffzusammensetzung in einem geeigneten Abschreckmedium, und
    e. Anlassen der Stahlwerkstoffzusammensetzung bei einer Temperatur im Bereich von 400 bis 700°C in einem Schutzgasofen.

3. Verfahren gemäß Anspruch 2, **dadurch gekennzeichnet, dass** die Herstellung des Stahlwerkstoffs weiterhin den folgenden Schritt umfasst:

    f. Nitrieren der erhaltenen Stahlwerkstoffzusammensetzung.

**Claims**

1. A piston ring, having a steel material composition as basic element, **characterized in that** the steel material composition contains the following elements in the portions indicated relative to 100% by weight of the steel material composition:

| | | |
|---|---|---|
| B: | 0.1% | by weight |
| C: | 0.7% | by weight |
| Mn: | 0.45% | by weight |
| Si: | 3.0% | by weight |
| Al: | 0.002% | by weight |
| Cr: | 2.0% | by weight |
| Cu: | 0.05% | by weight |
| Mo: | 0.5% | by weight |
| Nb: | 0.002% | by weight |
| P: | 0.03% | by weight |
| S: | 0.009% | by weight |
| Sn: | 0.001% | by weight |
| Ti: | 0.030% | by weight |
| V: | 0.027% | by weight |
| W: | 0.015% | by weight |

remainder: Fe and usual impurities,
wherein the sum of these elements is 100% by weight, wherein the steel material composition is produced by a method comprising the following steps:

 a. Producing a melt of the starter materials, and
 b. Pouring the melt into a prefabricated form.

**2.** A method for producing a piston ring as recited in claim 1, **characterized in that** the production of the steel material composition comprises the following steps:

 a. Producing a melt of the starter materials, and
 b. Pouring the melt into a prefabricated form,

and the following steps if necessary:

 c. Austenitising the steel material composition above its Ac3 temperature,
 d. Quenching the steel material composition in a suitable quenching medium, and
 e. Tempering the steel material composition at a temperature in the range from 400 to 700°C in a controlled atmosphere furnace.

**3.** The method as recited in claim 2, **characterized in that** the production of the steel material further comprises the following step:

 f. Nitriding the steel material composition obtained.

**Revendications**

**1.** Segment de piston comportant en tant que corps de base une composition d'acier, **caractérisé en ce que** la composition d'acier contient les éléments suivants dans la part mentionnée, en rapport à 100 % en poids de la composition d'acier :

| | | |
|---|---|---|
| B : | 0,1 % | en poids |
| C : | 0,7 % | en poids |
| Mn : | 0,45 % | en poids |
| Si : | 3,0 % | en poids |
| Al : | 0,002 % | en poids |

(suite)

| Cr : | 2,0 % | en poids |
|---|---|---|
| Cu : | 0,05 % | en poids |
| Mo : | 0,5 % | en poids |
| Nb : | 0,002 % | en poids |
| P : | 0,03 % | en poids |
| S : | 0,009 % | en poids |
| Sn : | 0,001 % | en poids |
| Ti : | 0,030 % | en poids |
| V : | 0,027 % | en poids |
| W : | 0,015 % | en poids |

Radical : Fe et impuretés habituelles,
sachant que la somme desdits éléments est de 100 % en poids,
la composition d'acier ayant été fabriquée au moyen d'un procédé qui comprend les étapes suivantes :

  a. de la production d'une masse en fusion des matières de départ et
  b. de la coulée de la masse en fusion dans un moule préfabriqué.

**2.** Procédé de fabrication d'un segment de piston selon la revendication 1, **caractérisé en ce que** la fabrication de la composition d'acier comprend les étapes suivantes :

  a. de la production d'une masse en fusion des matières de départ et
  b. de la coulée de la masse en fusion dans un moule préfabriqué,

ainsi que le cas échéant les étapes suivantes :

  c. de l'austénitisation de la composition d'acier au-delà de sa température Ac3,
  d. de la trempe de la composition d'acier dans un milieu de trempe adapté et
  e. du revenu de la composition d'acier à une température dans l'ordre de 400 à 700 °C dans un four à atmosphère contrôlée.

**3.** Procédé selon la revendication 2, **caractérisé en ce que** la fabrication de la composition d'acier comprend par ailleurs l'étape suivante :

  f. de la nitruration de la composition d'acier obtenue.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006038670 A1